# EUROPÄISCHE PATENTSCHRIFT

(11) **EP 0 880 477 B1**
(45) Veröffentlichungstag und Bekanntmachung des Hinweises auf die Patenterteilung: **17.04.2002**
(21) Anmeldenummer: 97914056.3
(22) Anmeldetag: 16.01.1997
(51) Int. Cl.: C02F 11/12, F26B 23/00, F26B 1/00

(54) **VERFAHREN ZUR TROCKNUNG VON KLÄRSCHLAMM ODER SCHLÄMMEN ÄHNLICHER KONSISTENZ**
PROCESS FOR DRYING SEWAGE SLUDGE OR SLUDGES OF SIMILAR CONSISTENCY
PROCEDE PERMETTANT DE SECHER DES BOUES D'EPURATION OU DES BOUES DE CONSISTANCE ANALOGUE

(30) Priorität: 23.01.1996 DE 19602290
(43) Veröffentlichungstag der Anmeldung: 02.12.1998
(73) Patentinhaber: Gebrüder Lödige Maschinenbaugesellschaft mbH, D-33102 Paderborn (DE)
(72) Erfinder: NUMRICH, Reiner, D-33178 Borchen (DE); LÜCKE, Roland, D-33098 Paderborn (DE)
(74) Vertreter: KOHLER SCHMID + PARTNER
(86) Internationale Anmeldenummer: DE9700061
(87) Internationale Veröffentlichungsnummer: WO9727147

(56) Entgegenhaltungen:
- EP-A- 0 365 851
- WO-A-95/14640
- DE-A- 3 943 366
- US-A- 4 223 452
- US-A- 4 687 546

## Beschreibung

Die Erfindung betrifft ein Verfahren zur Trocknung von Klärschlamm oder Schlämmen ähnlicher Konsistenz, bei dem Verunreinigungen aus bei der Trocknung anfallenden Brüden abgetrennt werden,

Ein Verfahren der eingangs genannten Art ist beispielsweise durch die DE 39 43 366 A1 bekanntgeworden.

In den beiden letzten Jahrzehnten ist Umweltschutz ein zentrales Thema in der öffentlichen Diskussion der Industrienationen geworden. Als deren Folge wurden beispielsweise in der Europäischen Gemeinschaft zahlreiche gesetzliche Regelungen geschaffen. Von staatlichen und kommunalen Behörden und von Industrieunternehmen wurden entsprechende Maßnahmen ergriffen, durch die eine verbesserte Abwasserbehandlung, d.h. Abwasserklärung, beziehungsweise Abwasserreinigung, erzielt wurde.

Beginnend mit der Richtlinie der EG betreffend die Verschmutzung in Folge der Ableitung bestimmter gefährlicher Stoffe in die Gewässer der EG aus dem Jahre 1976 bis hin zu der EG-Richtlinie vom Mai 1991 über die Behandlung von kommunalem Abwasser und die Verbesserungen in der Abwasserbehandlung allgemein wurden die Gesamtaufwendungen und Investitionen jährlich erhöht, um die Abwässer aus Industrieanlagen und privaten Haushalten besser klären zu können. Als logische Folge der Abwasserreinigung kam es in den letzten Jahren zu einem Anstieg der dabei anfallenden Klärschlamm-Menge, die in den nächsten Jahren noch weiter zunehmen wird. Daher wird nach Problemlösungen gesucht, wie dieses unvermeidliche Abfallprodukt der Abwasserbehandlung, der Klärschlamm, weiterbehandelt, verwendet oder entsorgt werden kann. Schlämme ähnlicher Konsistenz treten auch in Industriebetrieben auf, beispielsweise in Lackieranlagen, Waschanlagen jeder Art usw.

Da die Entsorgung des Klärschlamms durch die Verknappung des zur Verfügung stehenden Deponie-Raumes immer schwieriger und teurer wird, ist eine Masse- und Volumenreduzierung des anfallenden Klärschlamms vor einer Deponierung oder Weiterverwendung dringend erforderlich. Ab 2005 verbietet der Gesetzgeber die Deponierung von Klärschlamm. Eine Volumenreduzierung erleichtert auch den Transportvorgang und die Handhabbarkeit des Klärschlamms. Dies betrifft sowohl die gezielte Behandlung, d.h. Reinigung, die Weiterbehandlung und ggf. auch das Recycling des Klärschlamms.

Für die Masse- und Volumenreduzierung des Klärschlamms werden Verfahren getrennt oder zusammen eingesetzt, die zum Beispiel die Verdampfung der innerhalb der festen Schlammbestandteile gebundenen Feuchtigkeit (Trocknung), die Zersetzung der organischen Stoffe durch Entgasung und die Oxydation der organischen Stoffe durch Verbrennung betreffen.

Durch die DE 39 43 366 A1 werden Verfahrensschritte vorgeschlagen, die sich auf die Temperatur eines Wirbelschichtbetts, auf die Zuführung von Feststoffmaterial mit höherem Masseanteil an verdampfungsfähigem Material zum und Abführung von getrocknetem Feststoffmaterial aus dem Wirbelschichtbett sowie auf die mit dem Dampf abgeführten gasförmigen Stoffe des verdampfungsfähigen Materials und andere gasförmige Verunreinigungen beziehen.

Bei einer Energiebilanz dieser Vorgänge der Behandlung und Verwertung des Klärschlamms wird berücksichtigt, daß Energie aufgewendet werden muß, um die mechanische Entwässerung und die thermische Trocknung einschließlich der Brüdenbehandlung durchzuführen. Dagegen wird wiederum Energie frei, wenn der getrocknete Klärschlamm anschließend in einem Kraftwerk verbrannt wird. Wird der Klärschlamm ohne vorherige Faulung entwässert, getrocknet und anschließend verbrannt, so wirkt sich dies negativ auf die Energiebilanz aus. Wird ein Fäulnisprozess durchgeführt, so muß eine längere Behandlungsdauer nachteiligerweise in Kauf genommen werden, da das Zustandekommen des Fäulnisprozesses eine gewisse Zeit benötigt. Ein aus energietechnischer Sicht autarker Betrieb ist nicht möglich, da stets mehr Energie aufgewendet werden muß als frei wird. Damit sich die Energiebilanz bei der Klärschlammbehandlung ökologisch positiver gestaltet, sind Maßnahmen zur Verbesserung des Trocknungsverfahrens erforderlich.

Der vorliegenden Erfindung liegt daher die Aufgabe zugrunde, die bekannte thermische Trocknung dahingehend zu optimieren, daß die innerhalb der betriebenen Anlage aufgewendete Energie effizienter zur Trocknung des Klärschlamms eingesetzt wird, um eine möglichst positive Energiebilanz nach der anschließenden Verbrennung des getrockneten Klärschlamms ziehen zu können.

Diese Aufgabe wird erfindungsgemäß durch ein Verfahren zur Trocknung von Klärschlamm oder Schlämmen ähnlicher Konsistenz gelöst, bei dem der Klärschlamm oder die Schlämme ähnlicher Konsistenz in einer Kontakttrocknungsvorrichtung behandelt werden, aus der die bei der Kontakttrocknung anfallenden Brüden mindestens einem Verdichter zugeführt werden, in dem die Brüden auf einen höheren Druck gebracht und die Verunreinigungen aus den Brüden abgetrennt werden, und daß die gereinigten und druckerhöhten Brüden als Heizmedium in der Kontakttrocknungsvorrichtung zur Kontakttrocknung genutzt werden.

Bisher war beispielsweise ein Schlauchfilter zur Trennung von feuchten und festen Bestandteilen der Brüden und eine Kondensationseinrichtung zur Kondensation des Brüdendampfes erforderlich. Das entstehende Kühlwasser mußte abgeleitet werden, und ein Brüdenrestdampf mußte einem weiteren zusätzlichen Aufbereitungssystem, z.B. einem Filter, zugeführt werden, um den Brüdenrestdampf zu desodorieren. Für diese einzelnen Schritte mußte jeweils Energie aufgewendet werden.

Vorteilhafterweise werden die vorgenannten bei der Trocknung von Klärschlamm bisher verwendeten Schlauchfilter, die Kondensationseinrichtung und die Zusatzfilter überflüssig, beziehungsweise durch eine einzige Kontakttrocknungsvorrichtung mit einer Kompressionsstufe, d.h. durch einen Verdichter, ersetzt, in der die Brüden komprimiert werden. Es wäre auch denkbar, mehrere Kompressionsstufen innerhalb der Kontakttrocknungsvorrichtung vorzusehen.

In dem Verdichter werden die Brüden auf einen höheren Druck von vorzugsweise 1 bis 3 bar und damit auf eine höhere Kondensationstemperatur gebracht, wenn der erforderliche Verdichtungsdruck so hoch ist, daß die Siedepunkterhöhung überwunden wird und ein noch hinreichend großes Temperaturgefälle für die Wärmeübertragung zur Verfügung steht. Die entscheidenden Betriebsparameter für die Auswahl eines geeigneten Verdichters sind die Druckerhöhung und der Volumenstrom der zu verdichtenden Brüden. Wenn diese Bedingungen gegeben sind, lassen sich die Brüden in feste Bestandteile, im wesentlichen organische Feststoffe, und Dampf, bevorzugt Wasserdampf, trennen. Die festen organischen Bestandteile können separat abgeführt werden. Der heiße zusätzlich verdichtete Wasserdampf wird dagegen nicht mehr der Kondensationseinrichtung zugeführt und abgekühlt, sondern direkt als Heizmedium der Kontakttrocknungsvorrichtung zugeführt. Bei den Dämpfen kann es sich auch um lösungsmittelhaltige Dämpfe handeln, und die Trennung der Brüden in Feststoffe und Dampf kann unmittelbar in der Verdichtungsstufe erfolgen.

Vorteilhafterweise kann daher ein Dampfkessel zur Erzeugung des bisherigen Heizmediums kleiner dimensioniert werden oder aber nur noch dazu verwendet werden, um den Trocknungsvorgang in Gang zu setzen.

Auf jeden Fall kann festgestellt werden, daß die Energie zum Betreiben der Kondensationseinrichtung und Energie beim Betrieb der Kontakttrocknungsvorrichtung eingespart werden kann. Hinzu kommt, daß die bisher ungenutzte Energie der gereinigten Brüden in den Trocknungskreislauf eingebracht wird. Die Energiebilanz beim Betreiben der gesamten Anlage wird aus diesem Grund verbessert. Je nach Betriebsbedingungen, die sich auf die unterschiedlichen Klärschlämme beziehen, kann die betriebene Anlage idealerweise eine "positive" Energiebilanz aufweisen, wenn man die Verbrennung des getrockneten, brikettierten Klärschlamms hinzurechnet.

Bei einer besonders bevorzugten Ausführungsform wird als Kontakttrocknungsvorrichtung ein Rohrbündel-Kontakttrockner eingesetzt. Innerhalb eines Gehäuses der Kontakttrocknungsvorrichtung sind einzelne Rohre angeordnet, die parallel, vorzugsweise in Achsrichtung der Kontakttrocknungsvorrichtung ausgerichtet sind. Über die Oberfläche dieser Rohre, die über das im Innern der Rohre strömende Heizmedium erwärmt werden, erfolgt eine produktgerechte und effektive Trocknung des feuchten Klärschlamms bei gleichzeitiger Granulation des Trockengutes.

Bei einer Weiterbildung der Kontakttrocknungsvorrichtung wird der Kontakttrocknungsvorrichtung eine Mischvorrichtung vorgeschaltet, in der die zu trocknende Klärschlammkonsistenz hergestellt wird. Durch die Mischvorrichtung kann der beispielsweise mechanisch vorentwässerte Klärschlamm mit einem trockenen, feinkörnigen Granulat zu einem rieselfähigen Mischprodukt gemischt werden. Als zumischbares Granulat kann auch rückgeführter getrockneter Klärschlamm und/oder Feststoffanteile verwendet werden, wie sie sich bei der Brüdenreinigung in dem erfindungsgemäß verwendeten Verdichter ergeben. Durch die Zumischung dieser Produkte erhält der zu trocknende Klärschlamm eine torfige, nicht zusammenklebende Struktur, die den Trocknungsprozeß unterstützt und erleichtert.

Abschließend kann noch hinzugefügt werden, daß durch das erfindungsgemäße Verfahren zur Trocknung sämtliche anfallende Klärschlämme aus kommunalen Abwasserreinigungsanlagen und eben solchen Industrieanlagen durch ein gegenüber dem Stand der Technik vereinfachtes Verfahren getrocknet werden können. Das erfindungsgemäße Verfahren kann sowohl in kontinuierlich als auch in diskontinuierlich betriebenen Anlagen unterschiedlicher Größe angewandt werden.

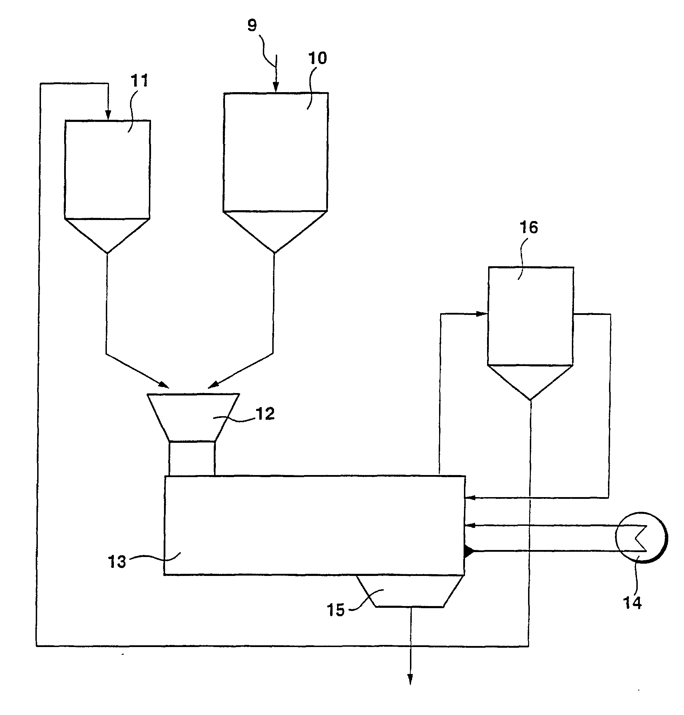

Weitere Vorteile ergeben sich aus der Beschreibung und der beigefügten Zeichnung. Ebenso können die vorstehend genannten und hier noch weiter aufgeführten Merkmale erfindungsgemäß jeweils einzeln oder in beliebigen Kombinationen miteinander verwendet werden. Die erwähnten Ausführungsformen sind nicht als abschließend zu verstehen, sondern haben vielmehr beispielhaften Charakter.

Die Erfindung ist in der Zeichnung dargestellt und wird anhand eines Ausführungsbeispieles näher erläutert.

Die Figur zeigt ein Flußdiagramm des erfindungsgemäßen Verfahrens.

In der Figur ist das erfindungsgemäße Verfahren teilweise stark schematisiert dargestellt.

Es ist ein Flußdiagramm gezeigt, daß den Ablauf des erfindungsgemäßen Verfahrens vereinfacht darstellt. Steuer- und Ventileinrichtungen sind nicht eingezeichnet, da diese für den Fachmann selbstverständlich und aus diesem Grund in bekannter Weise entsprechend eingesetzt werden.

In Pfeilrichtung 9 wird ein feuchter Klärschlamm oder ein Schlamm ähnlicher Konsistenz in einer ersten Sammelvorrichtung (Silo) 10 untergebracht. Der Klärschlamm kann zusammen mit einem in einer zweiten Sammelvorrichtung 11 befindlichen trockenen Granulat in eine Mischvorrichtung 12 gegeben werden, die bevorzugt ein horizontal arbeitender Feststoffmischer (Pflugscharmischer) ist. Über die Mischvorrichtung 12 gelangt das nunmehr torfige Mischprodukt in eine Kontakttrocknungsvorrichtung 13 zur thermischen Trocknung des Klärschlamms. Die Kontakttrocknungsvorrichtung 13 ist vorzugsweise ein Kontakttrockner, der in seinem Innern mehrere parallel ausgerichtete Rohre bzw. große wärmeübertragende Flächen aufweist. Über den Kontakt mit Außenflächen der Rohre kann das torfige Mischprodukt erwärmt werden, so daß ein getrocknetes Endprodukt und die sogenannten Brüden entstehen. Für den Trocknungsvorgang wird zunächst im Innern eines Heizkessels 14 ein Heizmedium erhitzt, das im Innern der Kontakttrocknungsvorrichtung 13 zirkulieren kann. Das getrocknete Endprodukt kann der Kontakttrocknungsvorrichtung 13 über eine Öffnung 15 entnommen werden, um es einer weiteren Nachbehandlung oder einer Verwendung als Düngemittel oder Brennmittel zuzuführen.

Die Brüden werden in einen Verdichter 16 abgeführt, in dem diese auf einen höheren Druck und damit auf eine höhere Kondensationstemperatur gebracht werden. Desweiteren wird bei der Verdichtung der Brüden auch der darin enthaltene Staubanteil abgeschieden. Der verdichtete Brüden ist gesättigt, da die entstehende Überhitzung durch zusätzliche Verdampfung abgebaut werden kann. Das neu gewonnene und abgeschiedene Feststoffprodukt kann über die zweite Sammelvorrichtung 11 in den Verfahrensablauf integriert werden. Es kann aber auch dem Verdichter 16 entnommen werden und anderweitig benutzt oder entsorgt werden.

Der gereinigte heiße Wasserdampf gelangt aus dem Verdichter 16 in die Rohre der Kontakttrocknungsvorrichtung 13, so daß die Wärmeenergie des heißen Wasserdampfes genutzt wird. Dies führt im stationären Zustand zu einem reduzierten Betrieb des Heizkessels 14, so daß dieser beispielsweise bei dem erfindungsgemäßen Verfahren zur Trocknung von Klärschlamm nur zum Start des Verfahrensablaufes und zur Kompensation von Energieverlusten beim Betreiben der Anlage benötigt wird. Der Heizkessel 14 wird im weiteren Verfahrensablauf nur dann zugeschaltet, wenn die Heizenergie des in dem Verdichter 16 erzeugten Wasserdampfs nicht ausreicht. Der Heizkessel 14 besitzt somit nur eine initiierende und unterstützende Wirkung zur Trocknung des Klärschlamms. Durch die Verwendung der heißen gereinigten und verdichteten Brüden lassen sich 85-90 % der bisher verwendeten Energie einsparen, die zur Erwärmung bekannter Kontakttrocknungsverfahren notwendig sind.

Bei einem Verfahren zur Trocknung von Klärschlamm oder Schlämmen ähnlicher Konsistenz wird eine Kontakttrocknungsvorrichtung (13) verwendet, bei der die bei einer Kontakttrocknung anfallenden Brüden mindestens einer Kompressionsstufe zugeführt werden. In dieser Kompressionstufe werden Brüden auf einen höheren Druck gebracht, und aus den Brüden werden Verunreinigungen abgetrennt. Die gereinigten und druckerhöhten Brüden werden als Heizmedium der Kontakttrocknungsvorrichtung (13) zur Kontakttrocknung zugeführt. Daher wird die innerhalb der betriebenen Anlage aufgewendete Energie effizienter zur Trocknung des Klärschlamms eingesetzt. Eine erheblich verbesserte Energiebilanz kann aus diesem Grund erzielt werden.

## Patentansprüche

1. Verfahren zur Trocknung von Klärschlamm oder Schlämmen ähnlicher Konsistenz, bei dem Verunreinigungen aus bei der Trocknung anfallenden Brüden abgetrennt werden,
**dadurch gekennzeichnet,**
**daß** der Klärschlamm oder die Schlämme ähnlicher Konsistenz in einer Kontakttrocknungsvorrichtung (13) behandelt werden, aus der die bei der Kontakttrocknung anfallenden Brüden mindestens einem Verdichter (16) zugeführt werden, in dem die Brüden auf einen höheren Druck gebracht und die Verunreinigungen aus den Brüden abgetrennt werden, und daß die gereinigten und druckerhöhten Brüden als Heizmedium in der Kontakttrocknungsvorrichtung (13) zur Kontakttrocknung genutzt werden.

2. Verfahren nach Anspruch 1, **dadurch gekennzeichnet, daß** als Kontakttrocknungsvorrichtung (13) ein Rohrbündelkontakttrockner eingesetzt wird.

3. Verfahren nach Anspruch 1 oder 2, **dadurch gekennzeichnet, daß** der Kontakttrocknungsvorrichtung (13) eine Mischvorrichtung (12) vorgeschaltet wird, in der die zu trocknende Klärschlammkonsistenz hergestellt wird.

## Claims

1. Method for drying sewage sludge or sludges of similar consistency, wherein impurities are separated from vapours produced during drying,
**characterized in that**
the sewage sludge or sludges of similar consistency are treated in a contact drying device (13) from which the vapours produced during contact drying are supplied to at least one compressor (16) in which the vapours are put under increased pressure and the impurities are separated from the vapours, and that the purified and pressure-increased vapours are utilized as heating medium in the contact drying device (13) for contact drying.

2. Method according to claim 1, **characterized in that** a contact dryer comprising several pipe bundles is used as contact drying device (13).

3. Method according to claim 1 or 2, **characterized in that** the contact drying device (13) is preceded by a mixing device (12) in which the sewage sludge consistency for drying is produced.

## Revendications

1. Procédé de séchage de boues de curage ou de boues ayant une consistance similaire, selon lequel on élimine des impuretés de fumées apparaissant lors du séchage,
**caractérisé en ce que**
la boue de curage ou les boues ayant une consistance similaire sont montées dans un dispositif de séchage par contact (13), à partir duquel les fumées apparaissant lors du séchage par contact, sont envoyées au moins à un condenseur (16), dans lequel les fumées sont placées à une pression supérieure et les impuretés sont séparées des fumées, et que les fumées purifiées, dont la pression est accrue, sont utilisées en tant que milieu de chauffage dans le dispositif (13) de séchage par contact, pour l'exécution du séchage par contact.

2. Procédé selon la revendication 1, **caractérisé en ce qu'**on utilise comme dispositif (13) de séchage par contact, un dispositif de séchage par contact comprenant un faisceau de tubes.

3. Procédé selon la revendication 1 ou 2, **caractérisé en ce qu'**en amont du dispositif (13) de séchage par contact est installé un dispositif de mélange (12), dans lequel la consistance de la boue de curage, qu'il faut sécher, est établie.
